# EUROPÄISCHE PATENTSCHRIFT

(11) **EP 2 251 944 B1**
(45) Veröffentlichungstag und Bekanntmachung des Hinweises auf die Patenterteilung: **08.04.2015**
(21) Anmeldenummer: 10004629.1
(22) Anmeldetag: 03.05.2010
(51) Int. Cl.: H02B 1/20

(54) **Querverbinder für auf einem Tragorgan angereihte Schaltgeräte**
Cross connection for switching devices arranged on a support body
Connecteur transversal pour des commutateurs série sur un organe de support

(30) Priorität: 15.05.2009 DE 102009021461
(43) Veröffentlichungstag der Anmeldung: 17.11.2010
(73) Patentinhaber: Eaton Electrical IP GmbH & Co. KG, 12529 Schönefeld (DE)
(72) Erfinder: Knörrchen, Oliver, 50858 Köln (DE); Stanke, Stephan, 53359 Rheinbach (DE); Nowak, Jan Karol, 53881 Euskirchen (DE)
(74) Vertreter: Eaton IP Group EMEA

(56) Entgegenhaltungen:
- US-A1- 2005 013 074
- US-A1- 2009 109 606

## Beschreibung

Die Erfindung betrifft mehrphasige Querverbinder zur Potentialführung zwischen mindestens zwei auf einem Tragorgan angereihten Schaltgeräten.

Aus der US 2009/0109606 A1 ist eine mehrphasige Sammelschiene bekannt geworden, die zur Potentialführung zwischen auf einem Tragorgan angereihten Schaltgeräten verwendet werden kann. Die Sammelschiene weist seitlich an mindestens einem Ende ihrer Längsstreckung Zugangskontaktöffnungen, so dass zwei benachbarte Sammelschienen über geeignete Verbindungsstecker elektrisch kontaktiert werden können.

Aus der DE 10156214 B4 ist ein Sammelschienensystem bekannt geworden, welches aus mindestens zwei Querverbindern (Sammelschienenblöcke) besteht. Die Querverbinder sind mit Verbindungsmodulen untereinander elektrisch kontaktiert. An einem Querverbinder (Sammelschienenblock) sind feste Einspeiseklemmen vorhanden.

Der Erfindung liegt die Aufgabe zugrunde, ein System von steckbaren Querverbindern zur Potentialführung zwischen Schaltgeräten anzugeben, welches variabel für unterschiedliche Schaltgerät-Anreihungen einsetzbar ist.

Die Aufgabe wird erfindungsgemäß durch die Merkmale des unabhängigen Anspruches gelöst, während den abhängigen Ansprüchen vorteilhafte Weiterbildungen der Erfindung zu entnehmen sind.

Mit der Erfindung werden mehrphasige Querverbinder zur Potentialführung zwischen mindestens zwei auf einem Tragorgan angereihten Schaltgeräten angegeben, welche Steckeraufnahmen zur Potentialeinspeisung aufweisen, wobei die Querverbinder mindestens umfassen:
- eine für jede Phase vorhandene in einem sich längserstreckenden Isolierstoffgehäuse angeordnete Stromschiene,
- und jede Stromschiene eigene Steckzungen besitzt, die sich kammartig in einer gemeinsamen Ebene senkrecht zur Längserstreckung des Isolierstoffgehäuses wegerstrecken und in einer Folge, nebeneinander angeordnet sind, deren Reihenabstand einem ersten Rasterabstand der Steckeraufnahmen der nebeneinander auf dem Tragorgan anreihbaren Schaltgeräten entspricht,
- an mindestens einem Ende ihrer Längserstreckung L Zugangskontaktöffnungen 30.1, 32 zu den Stromschienen 28, so dass die Stromschienen benachbart angeordneter Querverbinder elektrisch kontaktierbar sind, und
- das Isolierstoffgehäuse 40 kastenförmig ausgebildet ist, und das Isolierstoffgehäuse Vorder- 42 und Rückseiten 44 hat, wobei sich auf der Vorderseite 42 die Steckzungen 24 erstrecken, und
- die Zugangskontaktöffnungen abdeckbar auf der Rückseite 44 des Isolierstoffgehäuses 40 angeordnet sind.

Im weiteren werden Merkmale aufgeführt, die einzeln oder in Kombination miteinander beansprucht und verwirklicht sein können.

Die Anzahl möglicher nebeneinander anreihbarer und mit Spannung versorgbarer Schaltgeräte wird begrenzt durch einen zulässigen Summenstrom, für den ein Querverbindersystem dimensioniert ist. Die Stromtragfähigkeit ist bei bekannten Querverbindungsanordnungen durch die Leiterquerschnitte der dort vorhandenen Litzenleitern bestimmt. Mit der Ausbildung von Querverbindern mit Stromschienen mit großem Leiterquerschnitt (statt mit Litzenleitern) kann der zulässige Summenstrom - und damit die Zahl möglicher Anreihungen - vergrößert werden.

Die Steckeraufnahmen an den Schaltgeräten sollen an Abgangsklemmen der Schaltgeräte ausgebildet sein, welche elektrisch parallel zu einem Schraub-Kontakt-Zugang des Schaltgeräts angeordnet sind. Bei bekannten Schaltgeräten führen Abgangsklemmen von einem Schraub-Kontakt-Zugang zum Schaltapparat des Schaltgeräts.

Das Isolierstoffgehäuse ist kastenförmig ausgebildet, mit einer Längserstreckung parallel zur Reihung der Schaltgeräte, damit auch parallel zu einem Tragorgang (zum Beispiel einer Hutprofilschiene), auf der die Schaltgeräte aufreihbar sind. Als Vorderseite des Isolierstoffgehäuses wird die Fläche betrachtet aus der die Steckzungen - in einer Ebene liegend - heraustreten. Diese Vorderseite ist im auf die Schaltgeräte gesteckten Zustand zu den Schaltgeräten gerichtet. Als Rückseite wird die Gehäusefläche betrachtet, die der Vorderseite gegenüberliegt und parallel zur Bedienfront der Schaltgeräte zu liegen kommt.

Auf der Rückseite befinden sich die Zugangskontaktöffnungen zu den Stromschienen. Die Zugangskontaktöffnungen sind - im Fall der Nichtbenutzung - abdeckbar sein. Öffnungen an den Querverbindern sollten auf jeden Fall fingersicher abdeckbar gestaltet sein.

Die Stromschienen sind als Flachschienen in drei Ebenen im Isolierstoffgehäuse angeordnet, wobei die Ebenen parallel liegen zu der Ebene, in der die Steckzungen aus dem Isolierstoffgehäuse heraustreten.

Die Stromschienen können endseitig im Isolierstoffgehäuse offen zugänglich ausgebildet sein und dort mit Kupplungsabschnitten versehen sein, so dass die Stromschienen von benachbart angeordneten Querverbindern ineinander greifen und sich elektrisch kontaktieren.

Hiernach gibt es mindestens zwei geeignete Typen (Typ I und Typ II) von Querverbindern. Ein Querverbinder vom Typ I hat an beiden Ende seiner Längserstreckung auf der Rückseite des Isolierstoffgehäuses ausgebildete Zugangskontaktöffnungen zu den Stromschienen.

Ein Querverbinder vom Typ II (zweite Variante) weist an einem ersten Ende seiner Längserstreckung auf der Rückseite Zugangskontaktöffnungen zu den Stromschienen auf und ist am zweiten Ende seiner Längserstreckung mit einem zweiten Kupplungsabschnitt versehen. Dieser Kupplungsabschnitt kann entweder zur Rückseite oder zur Vorderseite des Isolierstoffgehäuses offen zugänglich sein. Ein weiterer, zum Typ II der zweiten Variante passender Querverbinder weist an seinem ersten Ende einen ersten Kupplungsabschnitt auf, so dass die Stromschienen von benachbart angeordneten erstem und zweitem Querverbinder ineinander greifen und elektrisch kontaktierbar sind.

Die offenen Ausbildungen bei den Kupplungsabschnitten (entweder zur Rückseite oder zur Vorderseite des Isolierstoffgehäuses) können mit einer Abdeckkappe verschlossen werden.

Von den Stromschienen stehen je Schaltgerätezugang drei (je Pol) Steckzungen ab. Die Steckzungen sind in einer Ebene angeordnet und diese Ebene entspricht der Reihung der Stecköffnungen an den Schaltgeräten.

Die Steckzungen können je nach Anforderung und Ausbildung der Schaltgeräte als Rundstecker, als Flachstecker oder als Tulpenstecker gestaltet sind.

Vorzugsweise sollen die Querverbinder dreipolig ausgebildet sein.

Weitere Einzelheiten und Vorteile der Erfindung ergeben sich aus den folgenden, anhand von Figuren erläuterten Ausführungsbeispielen. Es zeigen
- Figur 1A und 1B:: ein Querverbinder (Typ I) in zwei Ansichten;
- Figur 2:: eine Darstellung von drei Schaltgeräten mit zwei Querverbindern (Typ I);
- Figur 3:: ein Querverbinder (Typ II), endseitig offen mit Kupplungsabschnitten;
- Figur 4:: eine Darstellung von 10 angereihten Schaltgeräten mit verschiedenen Querverbindern (Typ I);
- Figur 5:: ein Schaltgerät, geöffnet mit Sicht auf Abgangsklemme;
- Figur 6:: Schaltapparat eines Schaltgeräts mit Abgangsklemme und
- Figur 7:: eine Abgangsklemme.

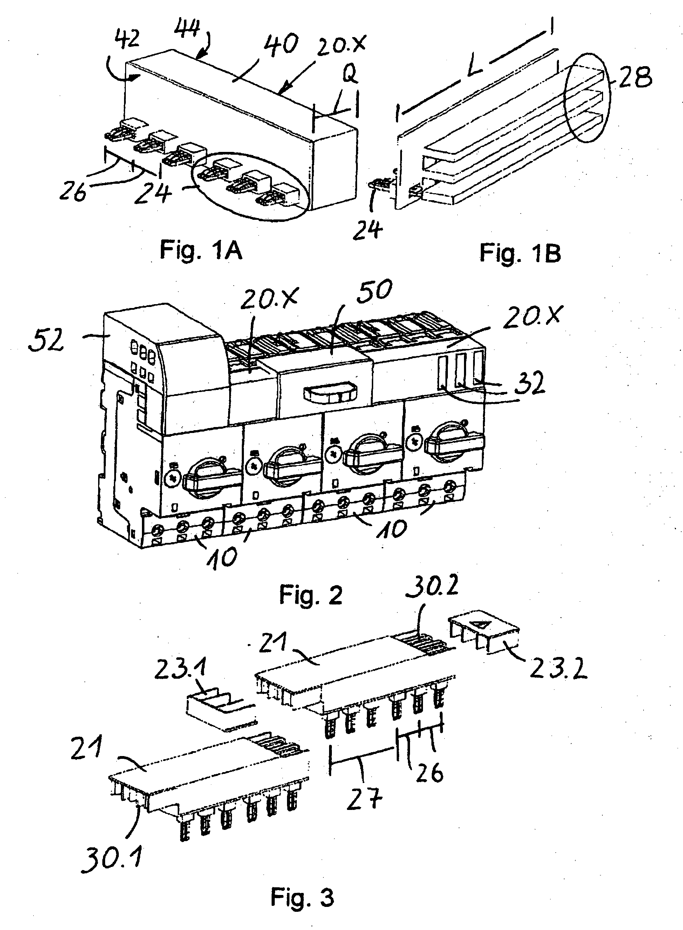

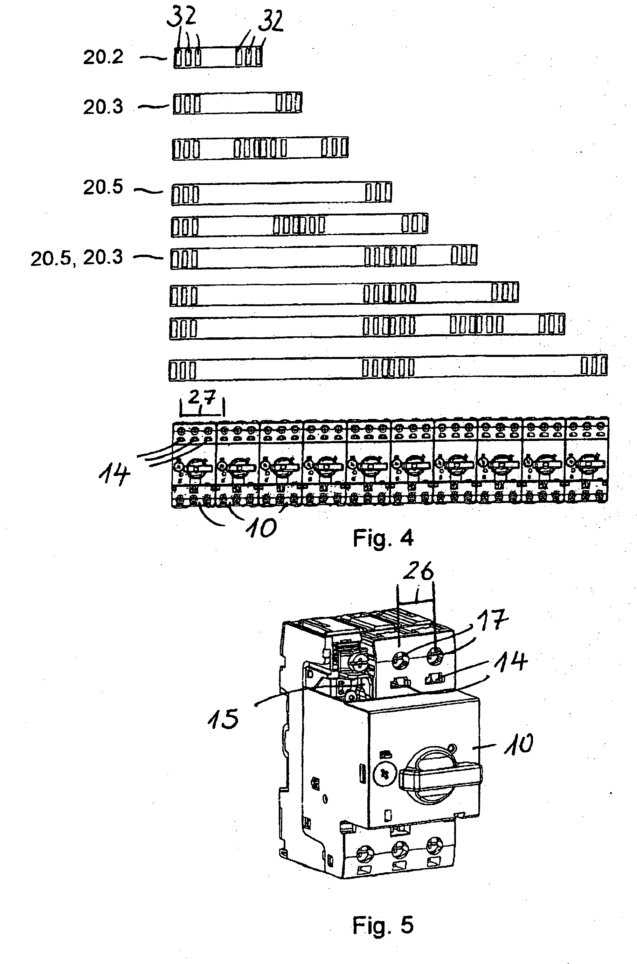

Die Fig. 1 zeigt zwei Ansichten eines ersten Typs (Typ I) von dreipoligen Querverbindern 20.X zur Potentialführung und Potentialüberbrückung für zwei auf einem Tragorgan angereihte Schaltgeräte. In Fig. 1A ist ein Querverbinder mit Sicht auf seine Vorderseite 42 gezeichnet, auf der in einer Ebene eine Reihe von Steckzungen 24 (kammartig) ausgebildet sind. Je Schaltgerätezugang sind drei (je Phase) Steckzungen 24 abstehend vorhanden. Die Steckzungen 24 haben einen (ersten) Rasterabstand 26, der dem Rasterabstand von an den Schaltgeräten 10 ausgebildeten Steckeraufnahmen 14 entspricht (siehe Fig. 5). In Fig. 1B ist ein geöffnetes, kastenförmig ausgebildetes Isolierstoffgehäuse 40 eines Querverbinders dargestellt, in dem drei als Flachschienen ausgebildete Stromschienen 28 erkennbar sind, die zueinander parallel in drei Ebenen liegen, die parallel zur Ebene sind, die von den Steckzungen 24 gebildet wird. Von jeder eine Phase festlegenden Stromschiene geht je eine elektrische Verbindung zu den Steckzungen. Die Länge L eines Isolierstoffgehäuses hängt von der Zahl der Steckzungen 24 ab. Die Querabmessung Q ist einheitlich bei allen Querverbindern. Die Steckzungen 24 sind in den Figuren als Flachstecker gestaltet; sie können jedoch auch eine andere, zu den Steckeraufnahmen 14 der Schaltgeräte passende Form haben.

In Fig. 2 sind vier Schaltgeräte 10 dargestellt, auf deren Einspeiseseite jeweils zwei Querverbinder 20.X (ebenfalls Typ I) aufgesetzt sind. An den Schaltgeräten 10 sind Steckeraufnahmen 14 - siehe Fig. 5 - vorhanden, die durch die aufgesetzten Querverbinder in Fig. 2 nicht erkennbar sind, weil abgedeckt. Links in der Fig. 2 ist auf dem ersten Querverbinder ein Einspeisemodul 52 aufgesteckt, der der Potentialeinspeisung aus dem Netz dient. Zwischen beiden Querverbindern ist ein Verbindermodul 50 aufgesteckt, der zur Potentialüberbrückung vom ersten zum zweiten Querverbinder ausgestaltet ist. Auf der Rückseite 44 der Querverbinder - also nach vorn in der Figur - sind Zugangskontaktöffnungen 32 vorhanden, von denen am rechten Querverbinder von Fig. 2 drei Zugangskontaktöffnungen 32 sichtbar sind. Diese Zugangskontaktöffnungen sollen verschließbar sein, beispielsweise mit einem Schieber. Zur weiteren Beschreibung der Querverbinder vom Typ I wird noch auf die Fig. 4 verwiesen.

In Fig. 3 ist ein zweiter Typ (Typ II - erste Variante) eines Querverbinders 21 dargestellt, dessen Stromschienen 28 endseitig im Isolierstoffgehäuse 40 zur Rückseite des Isolierstoffgehäuses 40 offen zugänglich ausgebildet sind. Die Stromschienen 28 sind endseitig mit Kupplungsabschnitten 30.1, 30.2 versehen, so dass die Stromschienen von benachbart angeordneten Querverbindern ineinander greifen und sich elektrisch kontaktieren können. Die erste endseitige Öffnung des Querverbinders 21 ist von der Rückseite 44 des Isolierstoffgehäuses 40 zugänglich, wobei die zweite endseitige Öffnung von der Vorderseite 42 her zugänglich ist. Nach Fig. 3 ergibt sich somit eine Steckfolge der Querverbinder 21 des Typs II von links nach rechts, weil die rechte endseitige Öffnung von außen (von vorn) zugänglich ist. Durch Stecken mit einem weiteren Querverbinder 21 auf den Kupplungsabschnitt 30.2 verlängert sich die Reihung und Potentialbrückung zum nächst benachbarten Querverbinder 21.

Die endseitigen Öffnung sind mit einer Abdeckkappe 23.1, 23.2 verschließbar, wenn keine benachbarte Fortsetzung mit einem weiteren Querverbinder 21 vorgesehen ist.

Querverbinder des Typs II (erste Variante) sind in Figur 3 beschrieben. Eine zweite Variante des Typs II ist noch zu erwähnen, obwohl sie zeichnerisch nicht dargestellt ist. Diese Variante ist ein Querverbinder, über den die Potentialeinspeisung aus dem Netz zu den Schaltgeräten vornehmbar ist. Ein solcher Querverbinder des Typs II (zweite Variante) hat an einem ersten Ende seiner Längserstreckung L Zugangskontaktöffnungen 32 zu den Stromschienen 28 und hat am zweiten Ende seiner Längserstreckung L einen (zweiten) Kupplungsabschnitt 30.2. Ein zweiter Querverbinder 21, der an seinem ersten Ende einen ersten Kupplungsabschnitt 30.1 aufweist, kann dann benachbart angeordnet werden. Die Stromschienen dieser benachbart angeordneten Querverbinder greifen dann ineinander und kontaktieren sich elektrisch.

Die Fig. 4 zeigt im oberen Teil eine Darstellung von neun Anreihungen (zeilenweise) verschiedener Querverbinder vom Typ I. Wobei mit Bezugszeichen 20.2, 20.3 und 20.5 unterschiedlich lange Querverbinder angedeutet sind. Der Querverbinder 20.2 ist für die Potentialbrückung zwischen zwei Schaltgeräten, der Querverbinder 20.3 ist für die Potentialbrückung zwischen drei Schaltgeräten oder der Querverbinder 20.5 ist für die Potentialbrückung zwischen fünf Schaltgeräten gedacht. In der unteren Zeile der Figur sind zehn Schaltgeräte 10 nebeneinander gezeigt, die jeweils untereinander mit einer der Anreihungen von darüber gezeichneten Querverbindern gekoppelt sein können. So können beispielsweise mit der Reihung Querverbinder 20.5 plus Querverbinder 20.3 acht Schaltgeräte, und mit der Reihung Querverbinder 20.5 plus Querverbinder 20.5 alle zehn Schaltgeräte gekoppelt sein. An den Querverbindern sind wiederum die Zugangskontaktöffnungen 32 sichtbar, die jeweils endseitig in den Isolierstoffgehäusen ausgebildet sind.

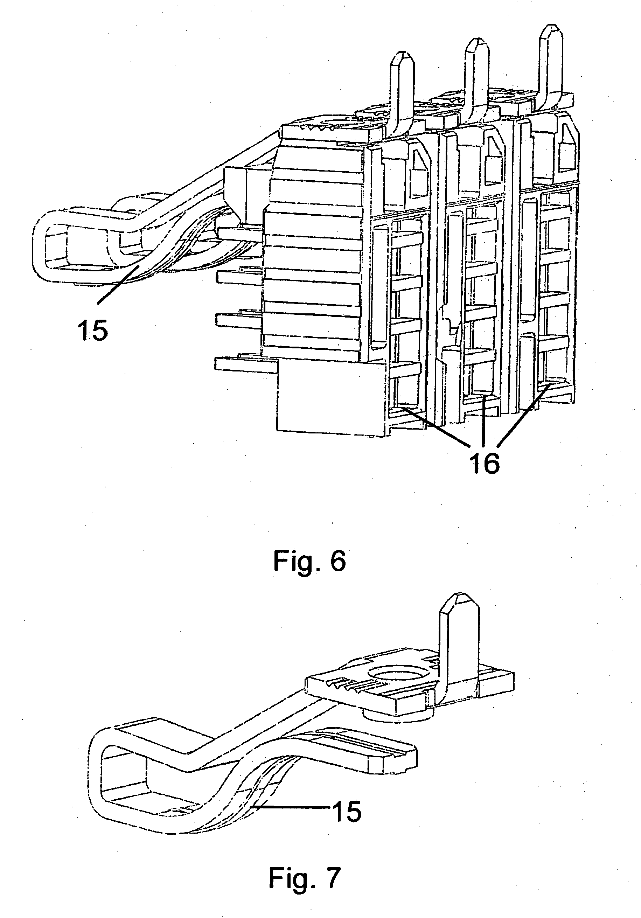

Fig. 5 zeigt eine Sicht in ein am Einspeisekontakt 17 geöffnetes Schaltgerät 10. Zu oberst liegen drei Schraub-Kontakte 17 nebeneinander. Die Schraub-Kontakte 17 sind von oben zugänglich und werden von vorn geschraubt. Von diesen Schraub-Kontakten führen Abgangsklemmen 15 (siehe Fig. 6 und 7) zum Schaltapparat des Schaltgeräts. Elektrisch parallel zu den Schraub-Kontakten 17 sind die Steckeraufnahmen 14 ausgebildet, die im Rasterabstand 26 vorliegen. Die Steckzungen 24 der Querverbinder sind derart passend ausgebildet, dass sie beim Stecken elektrisch die Abgangsklemmen 15 kontaktieren.

In der Fig. 6 sind drei Schaltapparate 16 eines Schaltgeräts mit Abgangsklemmen 15 dargestellt, wobei in der Figur 7 eine Abgangsklemme in Detailzeichnung zu sehen ist. Die Abgangsklemme hat einen nach oben ragenden Leiterabschnitt, der elektrisch mit dem Schraub-Kontakt 17 in Verbindung steht.

### Bezugszeichen

- 10: Schaltgerät
- 14: Steckeraufnahme
- 15: Abgangsklemme
- 16: Schaltapparat
- 17: Schraub-Kontakt
- 20.X, 20.1, 20.2: Querverbinder
- 21: Querverbinder
- 23.1 23.2: erste, zweite Abdeckkappe
- 24: Steckzunge
- 26: erster Rasterabstand
- 27: zweiter Rasterabstand
- 28: Stromschiene
- 30.1 30.2: Stromschienenkupplungsabschnitt
- 32: Zugangskontaktöffnung
- 40: Isolierstoffgehäuse
- 42, 44: Vorderseite, Rückseite
- 50: Verbindermodul (mehrpolig)
- 52: Einspeisemodul (mehrpolig)
- L: Längserstreckung
- Q: Quererstreckung

## Patentansprüche

1. Mehrphasige Querverbinder zur Potentialführung zwischen mindestens zwei auf einem Tragorgan angereihten Schaltgeräten (10), welche Steckeraufnahmen (14) zur Potentialeinspeisung aufweisen, wobei die Querverbinder (20.X, 21) mindestens umfassen:
• eine für jede Phase vorhandene in einem sich längserstreckenden Isolierstoffgehäuse (40) angeordnete Stromschiene (28),
• und jede Stromschiene (28) eigene Steckzungen (24) besitzt, die sich kammartig in einer gemeinsamen Ebene senkrecht zur Längserstreckung (L) des Isolierstoffgehäuses (40) wegerstrecken und in einer Folge, nebeneinander angeordnet sind, deren Reihenabstand einem ersten Rasterabstand (26) der Steckeraufnahmen (14) der nebeneinander auf dem Tragorgan anreihbaren Schaltgeräten (10) entspricht,
• und die Querverbinder (20.X, 21) mindestens an einem Ende ihrer Längserstreckung (L) Zugangskontaktöffnungen (32, 30.1, 30.2) zu den Stromschienen aufweisen, so dass die Stromschienen benachbart angeordneter Querverbinder elektrisch kontaktierbar sind,
**dadurch gekennzeichnet, dass**
- das Isolierstoffgehäuse (40) kastenförmig ausgebildet ist, und das Isölierstoffgehäuse Vorder- (42) und Rückseiten (44) hat, wobei sich auf der Vorderseite (42) die Steckzungen (24) erstrecken, und
- die Zugangskontaktöffnungen (32, 30.2) abdeckbar auf der Rückseite (44) des Isolierstoffgehäuses (40) angeordnet sind.

2. Querverbinder nach Anspruch 1, **dadurch gekennzeichnet, dass** eine Abdeckung der Zugangskontaktöffnungen (32) als Schieberelemente ausgebildet sind.

3. Querverbinder nach Anspruch 1, **dadurch gekennzeichnet, dass** eine Abdeckung der Zugangskontaktöffnungen (32) in Form einer Kappe ausgebildet ist.

4. Querverbinder nach einem der vorhergehenden Ansprüche, **dadurch gekennzeichnet, dass** die Stromschienen (28) als Flachschienen in drei Ebenen im Isolierstoffgehäuse (40) angeordnet sind.

5. Querverbinder nach einem der vorhergehenden Ansprüche, **dadurch gekennzeichnet, dass** ein erster Querverbinder auf seiner Rückseite (44) an einem ersten Ende seiner Längserstreckung (L) Zugangskontaktöffnungen (32) zu den Stromschienen (28) aufweist und am zweiten Ende seiner Längserstreckung (L) mit einem zweiten Kupplungsabschnitt (30.2) versehen ist und ein zweiter Querverbinder (21) an seinem ersten Ende einen ersten Kupplungsabschnitt (30.1) aufweist, und die Kupplungsabschnitte (30.1, 30.2) derart ausgebildet sind, dass die Stromschienen von benachbart angeordneten erstem und zweitem Querverbinder (21) ineinander greifen und elektrisch kontaktierbar sind.

6. Querverbinder nach Anspruch 5, **dadurch gekennzeichnet, dass** der zweite Querverbinder (21) an seinem zweiten Ende ebenfalls einen zweiten Kupplungsabschnitt (30.2) aufweist, so dass die Stromschienen von einem benachbart zum zweiten Querverbinder (21) angeordneten weiteren Querverbinder (21), bei dem ein erster Kupplungsabschnitt (30.1) ausgebildet ist, ineinander greifen und elektrisch kontaktierbar sind.

7. Querverbinder nach Anspruch 6, **dadurch gekennzeichnet, dass** Abdeckkappen (23.1, 23.2) vorhanden sind, mit denen die Kupplungsabschnitte (30.1, 30.2) verschließbar sind.

8. Querverbinder nach vorstehendem Anspruch, **dadurch gekennzeichnet, dass** die Steckzungen (24) als Rundstecker, als Flachstecker oder als Tulpenstecker gestaltet sind.

## Claims

1. Multi-phase cross-connectors for carrying potential between at least two switching devices (10) arranged in series on a support member, said switching devices having plug sockets (14) for feeding in the potential, the cross-connectors (20.X, 21) comprising at least:
• one bus bar (28) for each phase provided, arranged in an elongate housing (40) made of insulating material,
• and each bus bar (28) having its own plug-in tabs (24) which extend outwards in a comb-like configuration in a common plane perpendicular to the longitudinal extent (L) of the housing (40) of insulating material and are arranged side by side in a sequence, the serial spacing of which corresponds to a first grid spacing (26) of the plug sockets (14) of the switching devices (10) that are adapted to be arranged side by side in series on the support member,
• and the cross-connectors (20.X, 21) comprising, at least at one end of their longitudinal extent (L), contact openings (32, 30.1, 30.2) into the bus bars, so that the bus bars of cross-connectors arranged adjacent to one another can be connected electrically,
**characterised in that**
- the housing (40) of insulating material is of box-shaped configuration and the housing of insulating material has a front (42) and a back (44), the plug-in tabs (24) extending along the front (42), and
- the contact openings (32, 30.2) are arranged on the back (44) of the housing (40) of insulating material, so as to be capable of being covered.

2. Cross-connector according to claim 1, **characterised in that** a covering means for the contact openings (32) takes the form of slide elements.

3. Cross-connector according to claim 1, **characterised in that** a covering means for the contact openings (32) is in the form of a cap.

4. Cross-connector according to one of the preceding claims, **characterised in that** the bus bars (28) are arranged as flat bars in three planes within the housing (40) of insulating material.

5. Cross-connector according to one of the preceding claims, **characterised in that** a first cross-connector comprises, on its back (44), at a first end of its longitudinal extent (L), contact openings (32) into the bus bars (28) and is provided at the second end of its longitudinal extent (L) with a second coupling portion (30.2), and a second cross-connector (21) comprises at its first end a first coupling portion (30.1), and the coupling portions (30.1, 30.2) are configured such that the bus bars of the first and second cross-connector (21) arranged adjacent to one another engage with one another and can be connected electrically.

6. Cross-connector according to claim 5, **characterised in that** the second cross-connector (21) also comprises a second coupling portion (30.2) at its second end, so that the bus bars of a further cross-connector (21) arranged adjacent to the second cross-connector (21) and having a first coupling portion (30.1) formed thereon engage with one another and can be connected electrically.

7. Cross-connector according to claim 6, **characterised in that** covering caps (23.1, 23.2) are provided by means of which the coupling portions (30.1, 30.2) can be closed off.

8. Cross-connector according to the preceding claim, **characterised in that** the plug-in tabs (24) are configured as round connectors, flat connectors or tulip connectors.

## Revendications

1. Connecteurs transversaux polyphasés pour conduire un potentiel entre au moins deux commutateurs (10) qui sont mis en série sur un organe porteur et qui comportent des logements d'enfichage (14) pour l'introduction d'un potentiel, les connecteurs transversaux (20.X, 21) comprenant au moins :
- une barre conductrice (28) présente pour chaque phase et agencée dans un boîtier en matière isolante (40) s'étendant dans la direction longitudinale,
- chaque barre conductrice (28) possédant des languettes d'enfichage particulières (24) qui s'étendent en s'éloignant à la manière d'un peigne dans un plan commun perpendiculairement à l'extension longitudinale (L) du boîtier en matière isolante (40) et qui sont agencées les unes à côté des autres dans une succession dont l'écart entre éléments de la série correspond à un premier écart de trame (26) des logements d'enfichage (14) des commutateurs (10) mis en série les uns à côté des autres sur l'organe porteur,
- et les connecteurs transversaux (20.X, 21) comportant au moins à une extrémité de leur extension longitudinale (L) des ouvertures d'accès et de contact (32, 30.1, 30.2) vers les barres conductrices de telle sorte que les barres conductrices de connecteurs transversaux agencés au voisinage les uns des autres peuvent être mis en contact électrique,
**caractérisés en ce que**
- le boîtier en matière isolante (40) est conçu en forme de boîte et le boîtier en matière isolante a des côtés avant (42) et arrière (44), les languettes d'enfichage (24) s'étendant sur le côté avant (42), et
- les ouvertures d'accès et de contact (32, 30.2) sont agencées de manière à pouvoir être couvertes sur le côté arrière (44) du boîtier en matière isolante (40).

2. Connecteurs transversaux selon la revendication 1, **caractérisés en ce qu'**une couverture des ouvertures d'accès et de contact (32) est conçue comme élément à coulisser.

3. Connecteurs transversaux selon la revendication 1, **caractérisés en ce qu'**une couverture des ouvertures d'accès et de contact (32) est conçue sous la forme d'un capuchon.

4. Connecteurs transversaux selon l'une des revendications précédentes, **caractérisés en ce que** les barres conductrices (28) sont agencées comme des barres plates dans trois plans dans le boîtier en matière isolante (40).

5. Connecteurs transversaux selon l'une des revendications précédentes, **caractérisés en ce qu'**un premier connecteur transversal comporte sur son côté arrière (44) à une première extrémité de son extension longitudinale (L) des ouvertures d'accès et de contact (32) vers les barres conductrices (28) et **en ce qu'**il est muni à la deuxième extrémité de son extension longitudinale (L) d'un deuxième tronçon de couplage (30.2) et **en ce qu'**un deuxième connecteur transversal (21) comporte à sa première extrémité un premier tronçon de couplage (30.1), les tronçons de couplage (30.1, 30.2) étant conçus de telle sorte que les barres conductrices d'un premier et d'un deuxième connecteur transversal (21) qui sont agencés au voisinage l'un de l'autre pénètrent l'une dans l'autre et peuvent être mises en contact électrique.

6. Connecteurs transversaux selon la revendication 5, **caractérisés en ce que** le deuxième connecteur transversal (21) comporte également à sa deuxième extrémité un deuxième tronçon de couplage (30.2) de telle sorte que les barres conductrices d'un autre connecteur transversal (21) qui est agencé au voisinage du deuxième connecteur transversal (21) et sur lequel est conçu un premier tronçon de couplage (30.1) pénètrent l'une dans l'autre et peuvent être mises en contact électrique.

7. Connecteurs transversaux selon la revendication 6, **caractérisés en ce qu'**il est prévu des capuchons de couverture (23.1, 23.2) avec lesquels les tronçons de couplage (30.1, 30.2) peuvent être fermés.

8. Connecteurs transversaux selon la revendication précédente, **caractérisés en ce que** les languettes d'enfichage (24) sont conçues comme des connecteurs ronds, comme des connecteurs plats ou comme des connecteurs en tulipe.
